# EUROPEAN PATENT SPECIFICATION

(11) **EP 2 820 288 B1**
(45) Date of publication and mention of the grant of the patent: **12.07.2017**
(21) Application number: 13754892.1
(22) Date of filing: 25.02.2013
(51) Int. Cl.: F02M 35/024, F02M 35/10, F02M 35/02

(54) **AIR FILTER ARRANGEMENT**
LUFTFILTERANORDNUNG
AGENCEMENT DE FILTRE À AIR

(30) Priority: 01.03.2012 SE 1250193
(43) Date of publication of application: 07.01.2015
(73) Proprietor: Scania CV AB, 151 87 Södertälje (SE)
(72) Inventor: PETTERSSON, Emil, S-611 99 Tystberga (SE)
(74) Representative: Scania CV AB
(86) International application number: PCT/SE2013/050162
(87) International publication number: WO 2013/129998

(56) References cited:
- FR-A- 1 444 034
- US-A- 2 178 953
- US-A1- 2003 029 145
- US-A1- 2007 240 393
- US-A1- 2007 251 392
- US-A1- 2007 251 392
- US-A1- 2008 282 654
- US-A1- 2009 019 710

## Description

### TECHNICAL FIELD

The invention relates to an air filter arrangement comprising a filter housing for connection to a duct for a combustion engine. The invention relates also to a connecting duct for such an air filter arrangement.

### BACKGROUND

In known air filter arrangements for a combustion engine of a truck the filter housing often has a releasable bottom which allows a spent filter unit to be taken out and replaced from below, i.e. from the dirty lower side of the arrangement. Although the filter change takes place from the dirty side, there is still risk that in the limited space under the vehicle the new filter unit may scrape against the dirty region in and outside the filter housing, potentially leading to dirt making its way into the filter unit and thereby to the clean side of the air system, and hence to possible damage to the engine. Such a filter change also involves a considerable amount of work and use of space, particularly as the vehicle has to be raised or placed over a greasing pit or the like in a workshop to provide space for the work involved in the change. The operation may comprise removing the bottom of the filter housing, taking out the spent filter unit, cleaning the inside and bottom of the housing, inserting the new filter unit and refitting the bottom.

US 2007/251392 discloses a filter element comprising a filter medium which extends through an axial length between an end face at a clean air end and an end face at an unfiltered air end such that the filter medium separates an unfiltered air end of the filter element from a clean air end, in which the filter medium is circumferentially surrounded by a jacket and attached in a sealed manner to the jacket, and in which contours for securing the filter element in a filter housing are arranged on the jacket of the filter element. It would therefore be desirable to be able to change the filter from the upper side of the filter housing.

### SUMMARY OF THE INVENTION

An object of the invention is to propose a filter arrangement of the kind indicated in the introduction whereby the filter unit can be changed in a simpler way, with little risk of contamination of the clean side of the filter arrangement.

This is achieved by the features indicated in the claims set out below.

In one aspect of the invention the arrangement has a cover for closing a top aperture of the filter housing, an engine air outlet on the cover and a flexible pipe section on the engine air outlet for the connection to the duct, to allow the cover to removed from the top aperture and a filter unit to be introduced into and taken out of the filter housing when the housing is connected to the duct.

This arrangement thus makes it possible for the filter unit to be changed from the upper side of the arrangement without removing the closed duct system between the filter housing and the engine, thus facilitating the work and avoiding the need to raise the vehicle or place it on a greasing bridge or over a greasing pit.

In one embodiment the pipe section is deformable like a roll bellows. This makes it possible for it to be turned inside out, possibly with manual assistance from the service technician undertaking the filter change, and thus be shortened so that the cover can be moved away from the top aperture of the filter housing.

If the flexible pipe section has a narrowing cross-section in a direction of flow, the turning inside out may be facilitated so that the larger cross-section nearest to the cover will be on top of the narrower cross-section nearest to the duct to the engine.

The flexible pipe section may further be adapted to being slid over the engine air outlet and the duct, making it possible for it to be supported by them so that it does not collapse during operation. An end portion of the duct may then also serve as unrolling support for the flexible pipe section when the cover is opened for filter change or other servicing.

The pipe section may further have a curved portion. Configuring the pipe section in a suitable way will then it make it possible to pivot the cover up from the filter housing to leave space for filter change.

The cover may then be connected to the filter housing via a hinge.

For adaptation to the hinge, a middle line of the curved portion may run at approximately constant distance from the hinge.

The engine air outlet may then also be covered by a filter element. Such a filter element, which may comprise a filter cloth or a fine-mesh grille on the cover, provides protection against contamination of the clean side with the ducts to the engine when the cover is removed for filter change.

Other features and advantages of the invention may be indicated by the claims and the description of embodiment example set out below.

### BRIEF DESCRIPTION OF DRAWINGS

FIG. 1 is a view obliquely from above of an air filter arrangement according to the invention;
FIG. 2 is a longitudinal sectional view corresponding to FIG. 1 with cover open;
FIG. 3 is a longitudinal sectional view approximately as per FIG. 2 with air filter partly pulled out;
FIG. 4 is a detail view, with portions cut away, of an upper portion of an air filter arrangement according to the invention;
FIG. 5 is a detail view, with portions cut away, of a lower portion of an air filter arrangement according to the invention;
FIG. 6 is a side view with, portions cut away, of an upper portion of an air filter arrangement according to the invention with cover closed;
FIG. 7 is a view corresponding to FIG. 6 with cover open; and
FIGS. 8A-8C depict schematically a process of opening the cover of an arrangement substantially according to FIGS. 6 and 7.

Throughout the drawings, the same reference numerals are used for items with same or similar functions.

### DETAILED DESCRIPTION OF EMBODIMENTS

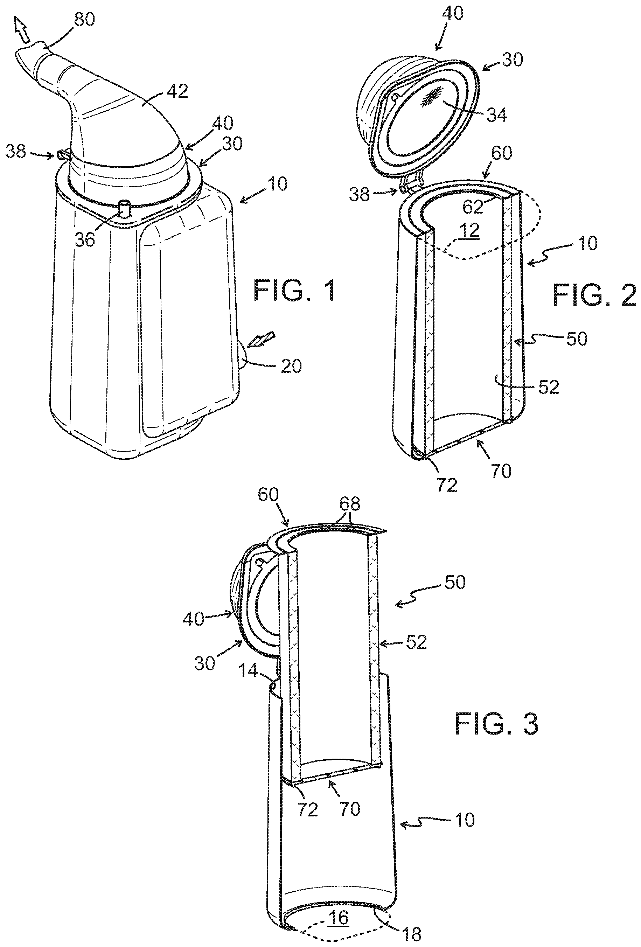

The air filter arrangement depicted in the drawings comprises in a known way an elongate air filter housing 10 for accommodating a filter unit or cartridge 50 comprising a substantially semicylindrical air filter 52. Air which is to be filtered passes through an air inlet 20 (FIG. 1) on the outside of the filter housing 10 into an annular space between the filter unit 50 and the filter housing 10 and, after passing through the filter 52, proceeds through an engine air outlet 40 in a cover 30 on the upper side of the filter housing 10. This engine air outlet 40 is itself intended to be connected to an undepicted air intake of a combustion engine via successive air ducts 42, 80.

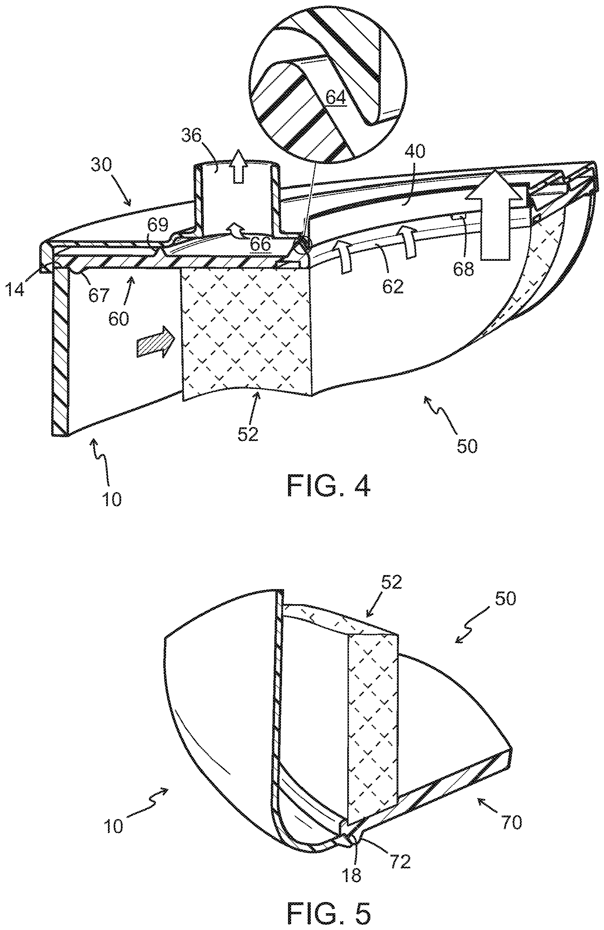

As most clearly depicted in FIG. 4, the filter 52 of the filter unit 50 is connected to a filter top in the form of an upper seal element 60 which has a central aperture 62 coaxial with an inside of the filter 52 and with the air outlet 40. When the filter unit 50 is fitted in the housing 10, the outer periphery of the seal element 60 abuts sealingly against an edge 14 which delineates a top aperture 12 of the housing. Centering means of the housing 10 and/or the filter top 60, e.g. an encircling protrusion 67 directed downwards from the underside of the filter top 60, may facilitate and ensure that the filter top 60 reaches a correct position at the upper side of the housing 10.

Between the filter unit's upper seal element 60 and the engine air outlet 40 there is an air aperture 64 (FIG. 4) to an extra air outlet 36. As indicated by the arrows in FIG. 4, part of the filtered air may then also be led to an encircling air duct 66 via an air aperture 64 between the cover 30 and the upper seal element 60 before making its way out through the extra air outlet 36. The air duct 66 may be delineated radially outwards by an encircling ridge 69 which is part of the upper seal element 60 and which abuts sealingly against the cover 30. In the example depicted, the extra air outlet 36, which may distribute filtered air in the arrangement to an undepicted air consumer, e.g. an air compressor, is situated in the filter housings 10 cover 30. The air aperture 64 extends along a periphery of the engine air outlet 40, with advantage round the whole periphery, in the form of a gap which slopes obliquely outwards and upwards. The width of the gap may be maintained by supports, e.g. a plurality of evenly distributed bulges 68 which may, as desired, be situated on the upper seal element 60 (FIG. 3) or on the cover 30.

As most clearly illustrated by the simplified depiction in FIG. 5, the filter unit's 50 filter 52 is also connected to a filter bottom in the form of a lower seal element 70. When the filter unit 50 is fitted in the housing 10, the outer periphery of the lower seal element 70 abuts sealingly against a lower circumferential edge 18 which delineates a bottom aperture 16 (FIG. 3) of the housing. This bottom aperture 16 allows dirt, cleaning agents and other particles to make their way out of the housing 10 when it is being cleaned, e.g. on the occasion of change of the filter unit. Centering means of the housing 10 and/or the filter bottom 70, e.g. an encircling protrusion 72 directed downwards from the underside of the filter bottom 70, may facilitate and ensure that the filter bottom 70 also reaches a correct position at the lower side of the housing 10.

Although other solutions are possible, the aforesaid cover 30 in FIGS. 1-3 and FIGS. 6-7 is depicted as being connected pivotably to the filter housing 10 via a hinge 38 situated at an upper outside of the housing 10. The cover's 30 air outlet 40 may further be covered by a filter element 34 (FIG. 2), e.g. a filter cloth and/or a fine-mesh grille, to prevent contaminants and solid particles from entering the air ducts 40, 80 when the cover 30 is open. The cover 30 may be fastened to the housing 10 by suitable connecting means, e.g. undepicted tightening screws or other kinds of fastenings.

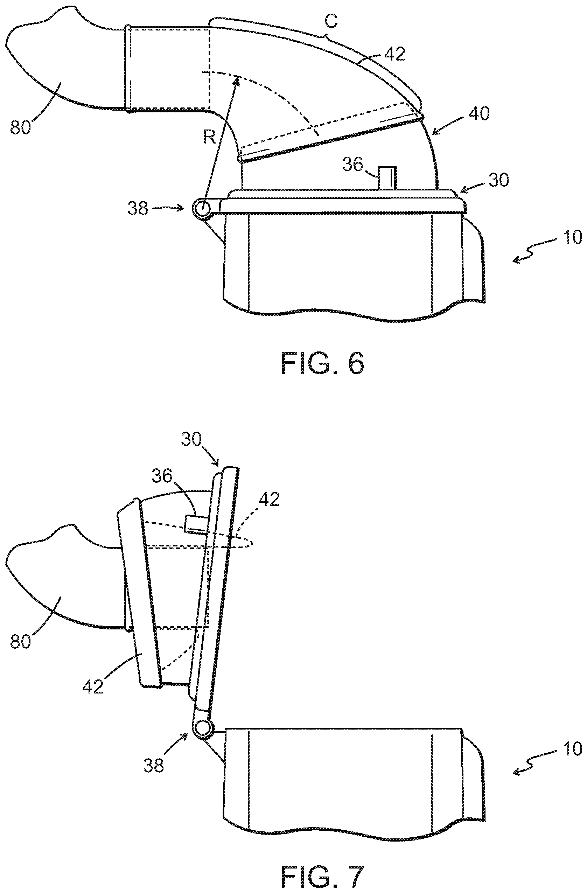

In the embodiment depicted in FIGS. 6 and 7, the air duct 40 situated nearest to the cover 30 is provided with a collapsible or flexible pipe section 42 which allows repeated opening and closing of the cover 30 without removal from or movement of the fixed air duct 80 situated nearest to the engine. In the embodiment depicted, the pipe section 42 is provided with a narrowing curved portion C made of bendable rubber elastic material which, like a roll bellows, allows the larger cross-section nearest to the cover 30 to be turned inside out, with or without help from a service technician, over the narrowing cross-section nearest to the air duct 80, approximately as depicted in FIG. 7, when the cover 30 is being opened. In a functional state, the pipe section 42 is stretched over the engine air outlet 40 and the air duct 80. A middle line of the curved portion may then extend at approximately constant distance R from the cover's hinge 38.

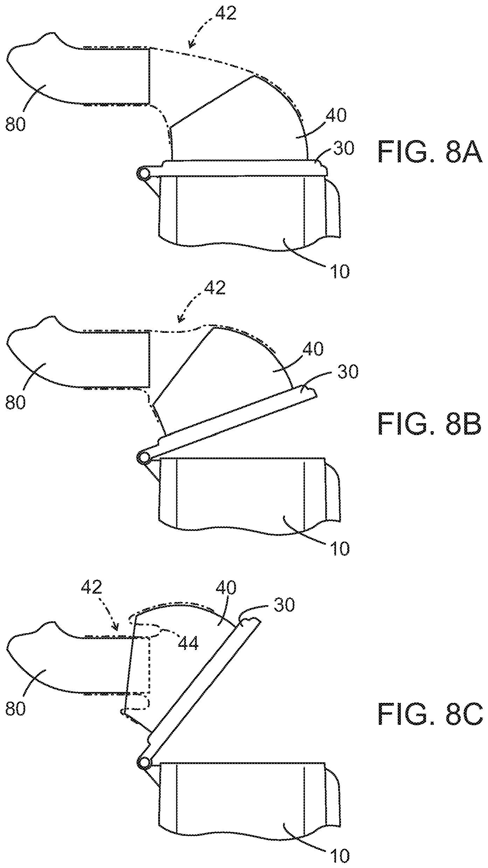

FIGS. 8A-8C depict in more detail an opening process of an arrangement substantially corresponding to that in FIGS. 6 and 7. The air ducts 40 and 80 extend relatively far into the flexible pipe section 42 in order to support it and prevent its collapsing during operation. As indicated in FIG. 8B, the cross-section of the pipe section 42 between the ducts may in various ways, e.g. by material notches or built-in stresses, be arranged to be drawn together somewhat or deformed radially inwards when the cover 30 starts opening. The larger duct 40 connected to the cover 30 will then be situated round and spaced from the narrower duct 80. When thereafter the cover in FIG. 8C approaches the open state which allows an undepicted filter unit to be taken out of the filter housing 10, a roll lobe 44 may naturally form on the portion of the pipe section 42 which is supported on an end portion of the narrower duct 80 so that the pipe section 42 unrolls like a roll bellows on this end portion.

In this and other embodiments, the cover 30 need not necessarily be connected pivotably to the remainder of the housing 10, as it may also in an undepicted way be capable of being completely lifted away from the housing 10.

## Claims

1. An air filter arrangement comprising a filter housing (10) for connection to a duct (80) for a combustion engine of a truck,
a cover (30) for closing a top aperture (12) of the filter housing (10),
an engine air outlet (40) on the cover (30), and
a flexible pipe section (42) on the engine air outlet for the connection to the duct (80), which pipe section (42) is adapted to allowing the cover (30) to be removed from the top aperture (12) and a filter unit (50) to be introduced into and taken out from the filter housing (10) when the housing is connected to the duct (80), **characterized in that** the pipe section (42) has a curved portion C which has a narrowing cross-section in a direction of flow and which is made of rubber elastic material which, like a roll bellows, allows the larger cross-section nearest to the cover (30) to be turned inside out over the narrowing cross-section nearest to the air duct (80) when the cover (30) is being opened.

2. An air filter arrangement according to claim 1, in which the pipe section (42) is arranged to be slid round the engine air outlet (40) and the duct (80).

3. An air filter arrangement according to claim 1, in which the cover (30) is connected to the filter housing (10) via a hinge (38).

4. An air filter arrangement according to claim 1, in which a middle line of the curved portion (C) runs at approximately constant distance (R) from the hinge (38).

5. An air filter arrangement according to claim 1 or 2, in which the engine air outlet (40) is covered by a filter element (34).

## Patentansprüche

1. Luftfilteranordnung mit einem Filtergehäuse (10) zum Verbinden mit einem Kanal (80) für einen Verbrennungsmotor eines Lastkraftwagens,
einer Abdeckung (30) zum Schließen einer oberen Öffnung (12) des Filtergehäuses (10),
einem Luftauslass (40) des Verbrennungsmotors in der Abdeckung (30), und
einem flexiblen Rohrabschnitt (42) am Verbrennungsmotor-Luftauslass zum Verbinden mit dem Kanal (80), wobei der Rohrabschnitt (42) so ausgeführt ist, dass die Abdeckung (30) von der oberen Öffnung (12) entfernt werden kann und eine Filtereinheit (50) in das Filtergehäuse (10) eingeführt und aus diesem herausgenommen werden kann, wenn das Gehäuse mit dem Kanal (80) verbunden wird,
**dadurch gekennzeichnet, dass** der Rohrabschnitt (42) einen gekrümmten Abschnitt C mit einem sich in Strömungsrichtung verengenden Querschnitt aufweist, der aus einem gummielastischen Material besteht, bei dem sich wie bei einem Rollbalg der größere Querschnitt, der der Abdeckung (30) am nächsten liegt, über den sich verengenden Querschnitt umstülpen lässt, der dem Luftkanal (80) am nächsten liegt, wenn die Abdeckung (30) geöffnet wird.

2. Luftfilteranordnung nach Anspruch 1, bei der der Rohrabschnitt (42) so angeordnet ist, dass er um den Verbrennungsmotor-Luftauslass (40) und den Kanal (80) geschoben werden kann.

3. Luftfilteranordnung nach Anspruch 1, bei dem die Abdeckung (30) über ein Scharnier (38) mit dem Filtergehäuse (10) verbunden ist.

4. Luftfilteranordnung nach Anspruch 1, bei dem eine Mittellinie des gekrümmten Abschnitts C in einem etwa konstanten Abstand (R) zum Gelenk (38) verläuft.

5. Luftfilteranordnung nach Anspruch 1 oder 2, bei der der Verbrennungsmotor-Luftauslass (40) von einem Filterelement (34) abgedeckt ist.

## Revendications

1. Dispositif de filtre à air comprenant un boîtier de filtre (10) pour raccordement à un conduit (80) pour un moteur à combustion d'un camion,
un couvercle (30) pour fermer une ouverture supérieure (12) du boîtier de filtre (10), une sortie d'air de moteur (40) sur le couvercle (30), et
un tronçon de tuyau souple (42) sur la sortie d'air de moteur pour le raccordement au conduit (80), lequel tronçon de tuyau (42) est adapté pour permettre de retirer le couvercle (30) de l'ouverture supérieure (12) et une unité de filtre (50) à être introduite dans le boîtier de filtre (10) et retirée de celui-ci lorsque le boîtier est raccordé au conduit (80), **caractérisé en ce que** le tronçon de tuyau (42) a une partie incurvée C qui a une section transversale qui rétrécit dans une direction d'écoulement et qui est constituée d'un matériau élastique en caoutchouc qui, comme un soufflet roulant, permet de retourner la section transversale plus grande la plus proche du couvercle (30) sur la section transversale rétrécie la plus proche du conduit d'air (80) lorsque le couvercle (30) est ouvert.

2. Dispositif de filtre à air selon la revendication 1, dans lequel le tronçon de tuyau (42) est agencé pour être glissé autour de la sortie d'air moteur (40) et du conduit (80).

3. Dispositif de filtre à air selon la revendication 1, dans lequel le couvercle (30) est raccordé au boîtier de filtre (10) par l'intermédiaire d'une charnière (38).

4. Dispositif de filtre à air selon la revendication 1, dans lequel une ligne médiane de la partie incurvée (C) s'étend à une distance approximativement constante (R) de la charnière (38).

5. Dispositif de filtre à air selon la revendication 1 ou 2, dans lequel la sortie d'air moteur (40) est recouverte par un élément de filtre (34).
